# EUROPEAN PATENT APPLICATION

(11) **EP 4 644 260 A1**
(43) Date of publication of application: **05.11.2025**
(21) Application number: 22970013.3
(22) Date of filing: 27.12.2022
(51) Int. Cl.: B64U 10/13, A01D 46/30, A01D 91/04

(54) **WORK SYSTEM AND FLYING BODY**

(71) Applicant: Kubota Corporation, Osaka 556-8601 (JP)
(72) Inventor: MASUMOTO Tadahisa, Sakai-shi, Osaka 590-0908 (JP)
(74) Representative: Cabinet Beau de Loménie
(86) International application number: PCT/JP2022/048150
(87) International publication number: WO 2024/142219

(57) **Abstract**

A work system (A) includes: a flying object (G) having a body (1) capable of flight, the body (1) having a work section (2) that performs work; a collection vehicle (E) that collects a work-related item (P) related to body work that is work performed by the body (1); a collection vehicle position acquisition unit that acquires collection vehicle position information indicating a position of the collection vehicle (E); and a work control unit that controls the body work based on the collection vehicle position information.

## Description

### Technical Field

The present invention relates to a work system including a flying object, and a flying object.

### Background Art

Patent Document 1 describes a flying object (referred to as a "multicopter" in Patent Document 1). The flying object includes a rotor unit. This flying object can fly by driving a rotor in the rotor unit.

### Prior Art Document

### Patent Document

Patent Document 1: JP 2014-227016A

### Disclosure of the Invention

### Problem to be Solved by the Invention

A configuration is conceivable in which the flying object described in Patent Document 1 is provided with a harvesting section that harvests a crop in an agricultural field, and a collection vehicle (e.g., a truck) collects the crop harvested by the harvesting section. In this case, if a configuration is used in which the flying object includes a camera, crops are detected based on a captured image captured by the camera (e.g., by using a neural network trained using deep learning), and harvesting work is performed automatically, it is possible to reduce the labor required for harvesting work. However, a situation is envisioned in which the flying object performs harvesting work at a location unintended by the user.

An object of the present invention is to provide a work system and a flying object that can easily prevent work from being performed at a location unintended by the user.

### Means for Solving Problem

The feature of a work system according to the present invention is that the work system includes: a flying object having a body capable of flight, the body having a work section configured to perform work; a collection vehicle configured to collect a work-related item related to body work that is work performed by the body; a collection vehicle position acquisition unit configured to acquire collection vehicle position information indicating a position of the collection vehicle; and a work control unit configured to control the body work based on the collection vehicle position information.

A feature of a flying object according to the present invention is that the flying object includes: a body capable of flight, the body having a work section configured to perform work; a collection vehicle position acquisition unit configured to acquire collection vehicle position information indicating a position of a collection vehicle configured to collect a work-related item relating to body work that is work performed by the body; and a work control unit configured to control the body work based on the collection vehicle position information.

According to the present invention, the work performed by the body is performed based on the position of the collection vehicle. This makes it easy to realize a configuration in which the body is controlled in such a manner that work is performed only at a location corresponding to the position of the collection vehicle (e.g., around a fruit tree located near the collection vehicle). As a result, work is easily performed only at a location intended by the user.

That is, according to the present invention, it is easy to prevent a situation in which work is performed at a location unintended by the user.

Furthermore, in the present invention, it is preferable to include a range setting unit configured to set a work range based on the collection vehicle position information, in which the work control unit controls the body work in such a manner that the body work is executed within the work range and is not executed outside the work range.

According to this configuration, work is performed only within the work range that is set based on the position of the collection vehicle. This makes it easier to ensure that work is not performed at a location unintended by the user.

Furthermore, it is preferable that the work system according to the present invention includes a delivery section configured to deliver the work-related item from the flying object to the collection vehicle.

In addition, it is preferable that the flying object according to the present invention further includes a delivery section configured to deliver the work-related item to the collection vehicle.

According to these configurations, the work-related item is delivered to the collection vehicle by the delivery section. This makes it easier for the collection vehicle to reliably collect the work-related item.

Furthermore, in the work system according to the present invention, it is preferable that the delivery section has a speed reduction section configured to reduce a falling speed of the work-related item from the flying object to the collection vehicle.

In addition, in the flying object according to the present invention, it is preferable that the delivery section has a speed reduction section configured to reduce a falling speed of the work-related item to the collection vehicle.

These configurations make it possible to prevent the work-related item from falling from the flying object into the collection vehicle at a relatively high speed. This makes it easier to avoid a situation where the work-related item collides with the collection vehicle (specifically, for example, the loading platform of the collection vehicle) at a high speed, resulting in damage to the work-related item.

Furthermore, in the present invention, it is preferable to include a buffer section that softens collision of the work-related item against the collection vehicle.

According to this configuration, it is easy to avoid a situation such as the work-related item colliding with the collection vehicle (specifically, for example, the loading platform of the collection vehicle) and the work-related item being damaged.

Furthermore, in the present invention, it is preferable that no member coupling the flying object and the collection vehicle is provided.

With this configuration, the degree of freedom in the positional relationship between the flying object and the collection vehicle is improved compared to a case where a member coupling the flying object and the collection vehicle is included. As a result, work efficiency is likely to improve.

Furthermore, in the present invention, it is preferable that the work-related item is produce produced in an agricultural field, the work section is a harvesting section configured to harvest the produce in the agricultural field, and the body work is work of harvesting the produce by the body.

This configuration makes it easier to avoid a situation where harvesting work is performed at a location unintended by the user.

### Brief Description of the Drawings

FIG. 1 is a side view showing a configuration of a flying object and a collection vehicle.
FIG. 2 is a plan view showing the configuration of the flying object and the collection vehicle.
FIG. 3 is a block diagram showing a configuration of a work system.
FIG. 4 is a side view showing a configuration of a flying object and the like in another embodiment (1).
FIG. 5 is a side view showing a configuration of a flying object and the like in another embodiment (2).
FIG. 6 is a plan view showing a configuration of a flying object and a collection vehicle in another embodiment (7).

### Best Mode for Carrying Out the Invention

### Overall Configuration of Work System

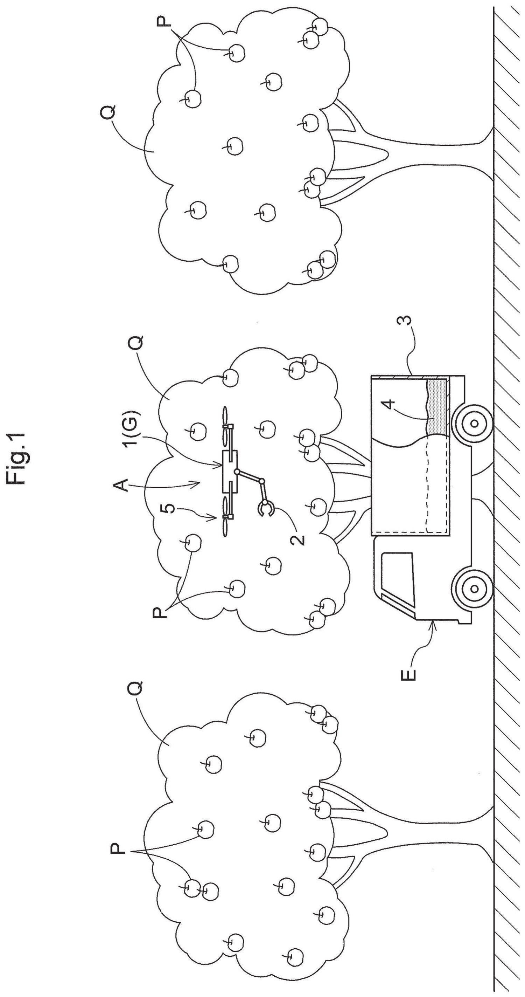

In this embodiment, in order to facilitate understanding, the work of harvesting produce P will be described as one form of work performed by a flying object G within a range designated by a collection vehicle E, but the present invention is not limited to this. As shown in FIG. 1, a work system A in this embodiment includes a flying object G and a collection vehicle E that is capable of travel. The flying object G and the collection vehicle E are capable of communicating (transmitting information) with each other. Note that there may be one or more of each of the flying object G and the collection vehicle E included in the work system A.

In this embodiment, the collection vehicle E is a truck having a loading platform 3. However, the present invention is not limited to this, and the collection vehicle E may be any type of vehicle.

The flying object G includes a body 1. The body 1 includes a flight apparatus 5. The flight apparatus 5 includes, for example, a plurality of propellers and the like. The body 1 is configured to be able to fly by driving the flight apparatus 5. In this embodiment, the flying object G is a multicopter. However, the present invention is not limited to this, and the flying object G does not need to be a multicopter as long as it includes the body 1 that is capable of flight.

That is, the flying object G includes the body 1 that is capable of flight. The work system A also includes the flying object G having the body 1 that is capable of flight.

The body 1 has a harvesting section 2 (corresponding to a "work section" of the present invention). The harvesting section 2 is configured to perform work. That is, the body 1 has the harvesting section 2 that performs work. More specifically, the harvesting section 2 is configured to harvest produce P in an agricultural field. That is, the body 1 has the harvesting section 2 that harvests produce P in an agricultural field. Note that the produce P is an item produced in an agricultural field. The produce P corresponds to a "work-related item" according to the present invention. A work-related item is an item related to body work, which is work performed by the body 1. The body work in this embodiment is specifically the work of harvesting of the produce P by the body 1. In other words, harvesting work is a specific example of "body work". Note that "agricultural field" refers to a location for cultivating a crop. "Agricultural field" is a term that encompasses rice paddies, farmland (ordinary fields, orchards, and pastures), and the like.

In this embodiment, the harvesting section 2 is a robotic arm driven by an actuator (not shown). The actuator may be, for example, an electric motor or a hydraulic motor. However, the present invention is not limited to this, and the harvesting section 2 may have any structure as long as it is capable of harvesting the produce P in the agricultural field.

In this embodiment, the produce P is fruit (e.g., apples) of fruit trees Q in an agricultural field. However, there is no particular limitation to the type of the produce P. The produce P may be a vegetable, a grain, or the like.

In this embodiment, the harvesting section 2 harvests the produce P by grasping the produce P and separating it from the fruit tree Q. Note that although there is no particular limitation on the method for separating the produce P from the fruit tree Q, for example, the produce P may be separated from the fruit tree Q by rotating the produce P and twisting off the branch.

The flying object G is configured to automatically perform the work of harvesting the produce P. After harvesting the produce P, the flying object G automatically releases its grasp of the produce P above the loading platform 3 of the collection vehicle E. As a result, the produce P falls onto the loading platform 3. As a result, the produce P is collected by the collection vehicle E. Note that basically, work efficiency is improved by minimizing the vertical movement of the flying object G. However, depending on the type of the produce P, the flying object G may move vertically only to the minimum extent necessary when dropping the produce P into the collection vehicle E.

In this manner, the work system A includes the collection vehicle E that collects the produce P harvested by the harvesting section 2.

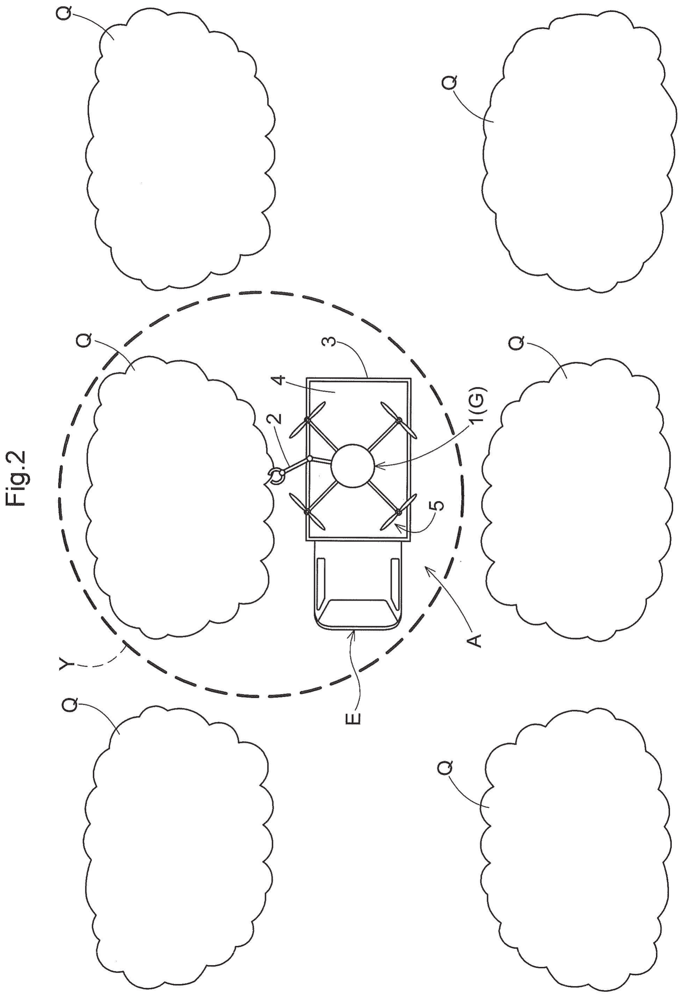

As shown in FIGS. 1 and 2, the loading platform 3 is formed in a box shape that is open upward. The bottom inside the loading platform 3 is provided with a buffer section 4. The buffer section 4 is configured to soften the collision of the produce P against the loading platform 3 when the produce P falls onto the loading platform 3. Although there is no particular limitation, the buffer section 4 may be constituted by, for example, rubber or urethane foam, or may have a known damper mechanism.

In this manner, the work system A includes the buffer section 4 that softens the collision of the produce P against the collection vehicle E.

Also, as shown in FIGS. 1 and 2, the work system A does not include a member for coupling the flying object G and the collection vehicle E. In other words, the flying object G is not physically connected to the collection vehicle E.

### Configuration of Work Control Unit

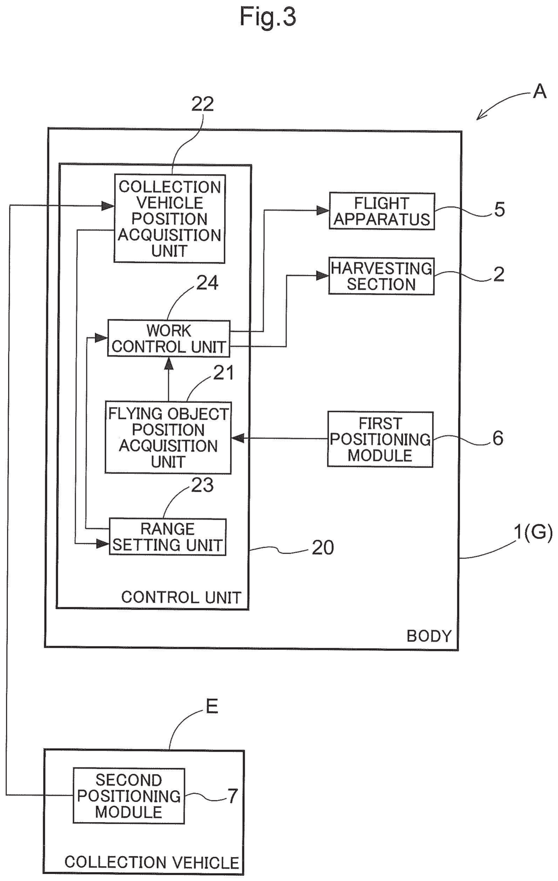

As shown in FIG. 3, the body 1 of the flying object G includes a first positioning module 6 and a control unit 20. The control unit 20 has a flying object position acquisition unit 21 and a collection vehicle position acquisition unit 22. The collection vehicle E also includes a second positioning module 7.

The first positioning module 6 and the second positioning module 7 receive a GPS signal from a satellite used in GPS (Global Positioning System). Then, the first positioning module 6 sends positioning data indicating the position of the body 1 to the flying object position acquisition unit 21 based on the received GPS signal. In addition, the second positioning module 7 sends positioning data indicating the position of the collection vehicle E to the collection vehicle position acquisition unit 22 based on the received GPS signal.

Note that the present invention is not limited to this. The first positioning module 6 and the second positioning module 7 need not use GPS. For example, the first positioning module 6 and the second positioning module 7 may use a GNSS (GLONASS, Galileo, Michibiki, BeiDou, etc.) other than GPS.

The flying object position acquisition unit 21 calculates body position information over time based on the positioning data acquired from the first positioning module 6. As a result, the flying object position acquisition unit 21 acquires body position information.

Note that the body position information is information indicating the position of the body 1. Although there is no particular limitation, the body position information in this embodiment is specifically the position coordinates of the body 1.

The collection vehicle position acquisition unit 22 calculates collection vehicle position information over time based on the positioning data acquired from the second positioning module 7. As a result, the collection vehicle position acquisition unit 22 acquires the collection vehicle position information.

Note that the collection vehicle position information is information indicating the position of the collection vehicle E. Although there is no particular limitation, the collection vehicle position information in this embodiment is specifically the position coordinates of the collection vehicle E. In particular, it is preferable that the collection vehicle position information is the position coordinates of the loading platform 3 of the collection vehicle E, since this allows precise control of the harvesting work, which will be described later.

In this manner, the work system A includes the collection vehicle position acquisition unit 22 that acquires collection vehicle position information indicating the position of the collection vehicle E. The flying object G also has the collection vehicle position acquisition unit 22 that acquires collection vehicle position information indicating the position of the collection vehicle E that collects the produce P harvested by the harvesting section 2.

As shown in FIG. 3, the control unit 20 has a range setting unit 23. The range setting unit 23 acquires the collection vehicle position information from the collection vehicle position acquisition unit 22. The range setting unit 23 automatically sets a work range Y (see FIG. 2) based on the collection vehicle position information.

In this manner, the work system A (more specifically, the flying object G) includes the range setting unit 23 that sets the work range Y based on the collection vehicle position information.

In the example shown in FIG. 2, the work range Y has a circular shape that surrounds the fruit tree Q that is located the closest to the collection vehicle E among the plurality of fruit trees Q and the collection vehicle E in a plan view. However, the present invention is not limited to this, and the work range Y may have any shape.

In addition, the work range Y may be defined by a region in a plan view, or may have a three-dimensional shape. For example, the work range Y may have a cylindrical or conical shape having a predetermined height.

Although there is no particular limitation, the range setting unit 23 may be configured to store a map showing the position of each fruit tree Q in the agricultural field, and to set the work range Y based on the map and the collection vehicle position information.

As shown in FIG. 3, the control unit 20 has a work control unit 24. The work control unit 24 is configured to control the harvesting section 2 and the flight apparatus 5. As a result, the work control unit 24 controls the work of the harvesting the produce P by the body 1. As a result, the body 1 automatically performs the work of harvesting the produce P.

Although there is no particular limitation, for example, the body 1 may include a camera (not shown) and be configured to detect the produce P based on a captured image captured by the camera (e.g., by using a neural network trained using deep learning). In this case, the work control unit 24 may control the harvesting section 2 and the flight apparatus 5 based on the detection result of the produce P, whereby the body 1 automatically performs the work of harvesting the produce P.

As shown in FIG. 3, the work control unit 24 acquires body position information from the flying object position acquisition unit 21. In addition, the work control unit 24 acquires information indicating the work range Y from the range setting unit 23. The work control unit 24 then controls the harvesting section 2 and the flight apparatus 5 based on the body position information and information indicating the work range Y, and thereby controls the work of harvesting the produce P performed by the body 1. At this time, the work control unit 24 controls the harvesting work in such a manner that the harvesting work is executed within the work range Y and is not executed outside the work range Y.

Here, as described above, the work range Y is set based on the collection vehicle position information. Then, the work control unit 24 controls the harvesting work of the produce P by the body 1 based on the information indicating the work range Y. That is, the control of the harvesting work of the body 1 by the work control unit 24 is based on the collection vehicle position information.

In this manner, the work system A (more specifically, the flying object G) includes the work control unit 24 that controls the work of harvesting the produce P by the body 1 based on the collection vehicle position information.

Note that the above-mentioned "controlling the harvesting work in such a manner that the harvesting work is executed within the work range Y and is not executed outside the work range Y" may specifically mean controlling the harvesting work in such a manner that the body 1 (flying object G) does not go outside the work range Y, or may mean controlling the harvesting work in such a manner that only the produce P located within the work range Y is harvested and the produce P located outside the work range Y is not harvested.

According to the configuration described above, the work of harvesting the produce P by the body 1 is performed based on the position of the collection vehicle E. This makes it easy to realize a configuration in which the body 1 is controlled in such a manner that harvesting work is performed only at a location corresponding to the position of the collection vehicle E (e.g., around the fruit tree Q located near the collection vehicle E). As a result, harvesting work is more likely to be performed only at a location intended by the user.

That is, the configuration described above makes it easier to avoid a situation where harvesting work is performed at a location unintended by the user.

### Other Embodiments

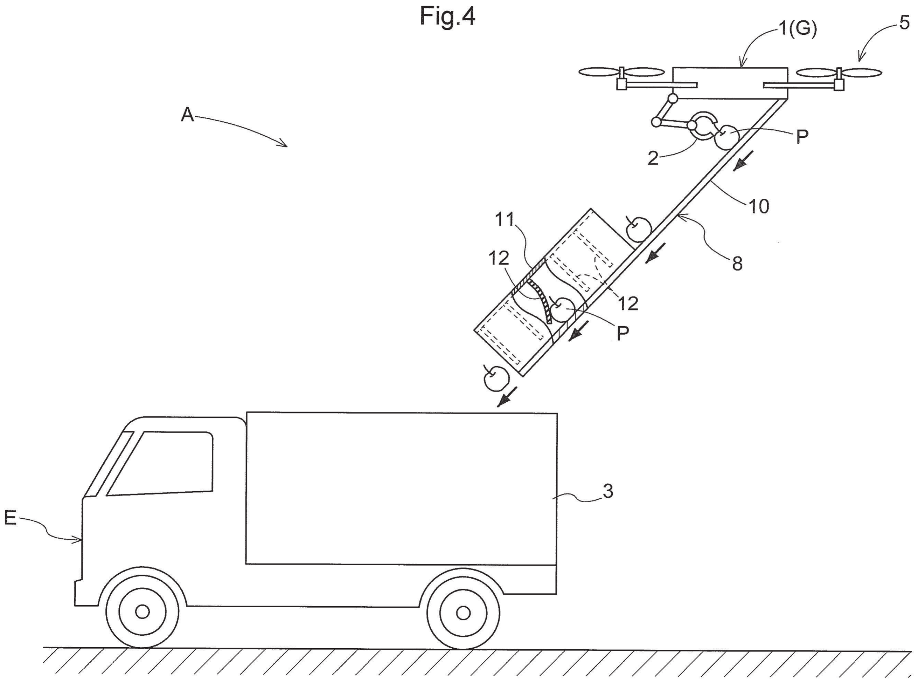

(1) As shown in FIG. 4, the flying object G may include a delivery section 8. The delivery section 8 has a guide section 10 that guides the produce P as it falls. The guide section 10 is an elongated plate-shaped member. The guide section 10 extends downward from a lower end of the body 1. The guide section 10 is fixed to the lower portion of the body 1 in an inclined orientation. The lower end of the guide section 10 is directed toward the loading platform 3 of the collection vehicle E.

A cylindrical passage section 11 is provided at a lower end of the guide section 10. A plurality of speed reduction sections 12 are fixed to the inside of the passage section 11. Although there is no particular limitation, the speed reduction sections 12 in this embodiment are constituted by rubber plates. The rubber plates (speed reduction sections 12) extend downward from a ceiling section (upper end) of the passage section 11, perpendicular to the guide section 10. The plurality of rubber plates (speed reduction sections 12) are arranged side by side at equal intervals along a direction in which the guide section 10 extends. However, the present invention is not limited to this. For example, taking into consideration the efficiency with which the harvested produce P falls, the size of each rubber plate (speed reduction section 12) may be made different such that a greater speed reduction effect occurs closer to the lower end of the guide section 10, or a plurality of rubber plates (speed reduction sections 12) may be arranged at unequal intervals.

When the harvested produce P is placed on the upper surface at the upper end of the guide section 10 by the harvesting section 2, the produce P falls according to the inclination of the guide section 10. As a result, the produce P is dropped onto the loading platform 3 of the collection vehicle E. This allows the produce P to be delivered from the flying object G to the collection vehicle E.

That is, the work system A shown in FIG. 4 includes the delivery section 8 that delivers the produce P from the flying object G to the collection vehicle E. The flying object G shown in FIG. 4 also includes the delivery section 8 that delivers the produce P to the collection vehicle E.

In addition, the produce P falls according to the inclination of the guide section 10 and passes through the passage section 11. At this time, the speed reduction sections 12 interfere with the falling produce P, thereby reducing the falling speed of the produce P.

That is, in the work system A shown in FIG. 4, the delivery section 8 has the speed reduction sections 12 that reduce the falling speed of the produce P from the flying object G to the collection vehicle E. Also, in the flying object G shown in FIG. 4, the delivery section 8 has the speed reduction sections 12 that reduce the falling speed of the produce P to the collection vehicle E.

Note that the rubber plates (speed reduction sections 12) are configured so as not to stop the produce P from falling, for example, by making the hardness of the rubber plates less than or equal to a predetermined value. In other words, the rubber plates (speed reduction sections 12) are configured to prevent the falling speed of the produce P from becoming 0 (zero).

In addition, "reducing the falling speed" may mean reducing the falling speed compared to a configuration in which the speed reduction sections 12 are not provided, or it may mean reducing the falling speed in such a manner that the falling speed immediately after the speed reduction sections 12 act is lower than the falling speed immediately before the speed reduction sections 12 act.

Note that the delivery section 8 is not limited to the configuration described above, and may have any configuration as long as it is configured to deliver the produce P from the flying object G to the collection vehicle E. In addition, the speed reduction sections 12 are not limited to the configuration described above, and may have any configuration as long as they are configured to reduce the falling speed of the produce P from the flying object G to the collection vehicle E.

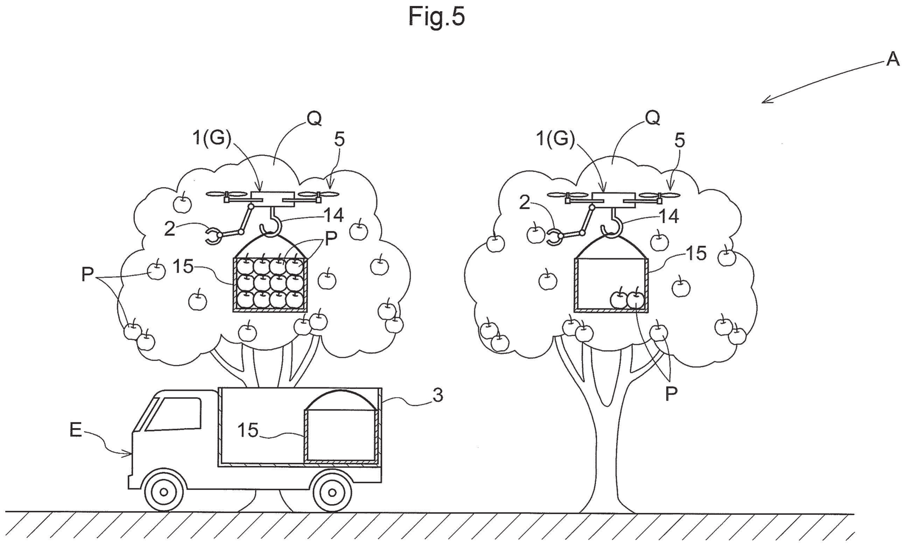

(2) As shown in FIG. 5, the body 1 of the flying object G may have a hook 14. The hook 14 is configured such that a storage section 15 can be suspended therefrom. Although there is no particular limitation, the storage section 15 in this embodiment is formed in a box shape that is open upward. In addition, a plurality of storage sections 15 can be placed on the loading platform 3.

In the example shown in FIG. 5, a plurality of flying objects G are performing harvesting work. Each flying object G places the harvested produce P in the storage section 15. In addition, an empty storage section 15 is placed on the loading platform 3 of the collection vehicle E.

The collection vehicle E detects a flying object G among the plurality of flying objects G in which the amount of the produce P stored in the storage section 15 has reached a predetermined amount (e.g., the full capacity of the storage section 15). Then, the collection vehicle E automatically moves below the detected flying object G. Thereafter, the flying object G stops harvesting work and descends, places the suspended storage section 15 on the loading platform 3, and releases the engagement between the storage section 15 and the hook 14. Furthermore, the flying object G suspends the empty storage section 15 placed on the loading platform 3. The flying object G then returns to harvesting work.

Note that although there is no particular limitation, detection of a flying object G in which the amount of produce P stored in the storage section 15 has reached a predetermined amount may be performed, for example, based on the transmission of a predetermined signal from the flying object G to the collection vehicle E. The signal may indicate that the amount of the produce P stored in the storage section 15 has reached a predetermined amount. In addition, all of the operations of the flying object G described above are executed automatically under the control of the work control unit 24.

(3) The range setting unit 23 may be configured to update the work range Y accompanying movement of the collection vehicle E.

(4) The range setting unit 23 need not be provided. In this case, for example, the work control unit 24 may control the harvesting work based on the distance between the flying object G and the collection vehicle E. More specifically, the work control unit 24 may control the harvesting work in such a manner that the distance between the flying object G and the collection vehicle E is maintained at a predetermined distance or less.

(5) The buffer section 4 need not be provided. In particular, if the produce P is planned to be processed, such as by crushing, it is conceivable to reduce the labor required for processing through collision between the produce P and the loading platform 3 (collection vehicle E) by not providing the buffer section 4.

For example, if the produce P is grapes for wine production and are planned to be crushed during a wine production step, it is conceivable that at least some of the produce P is crushed through collision between the produce P and the loading platform 3 (collection vehicle E) by not providing the buffer section 4. In this case, it is preferable that the loading platform 3 is provided with a juice collection section for collecting juice that comes out of the crushed produce P.

(6) A member that couples the flying object G and the collection vehicle E may also be provided. The member may include, for example, a cable for supplying power from the collection vehicle E to the flying object G, or a cable for communication between the collection vehicle E and the flying object G.

(7) There may be a one-to-one correspondence between collection vehicles E and flying objects G, one collection vehicle E may correspond to a plurality of flying objects G, or one flying object G may correspond to a plurality of collection vehicles E. When a plurality of flying objects G correspond to one collection vehicle E, only one work range Y may be set, or a plurality of work ranges Y corresponding to the respective flying objects G may be set. In addition, some or all of the plurality of work ranges Y may be the same range, or each work range Y may be a different range from the others.

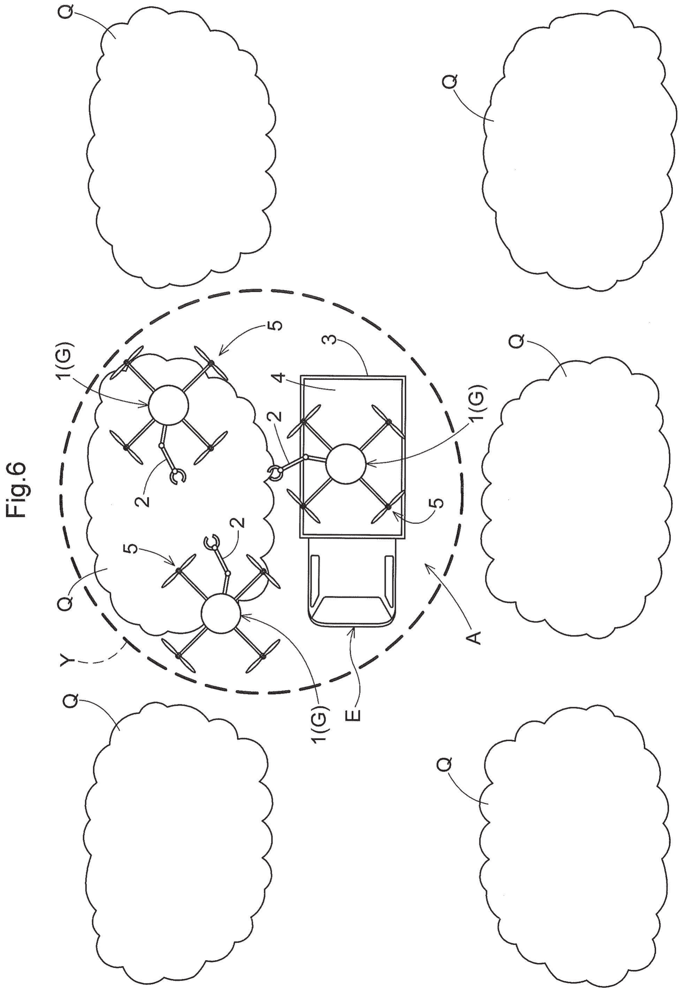

In the example shown in FIG. 2, the collection vehicles E and the flying objects G are in one-to-one correspondence. In contrast, in the example shown in FIG. 6, a plurality of (more specifically, three) flying objects G correspond to one collection vehicle E.

The plurality of flying objects G may be configured to work while maintaining a constant distance from each other using sensors or the like. It is also possible to use a configuration in which the number of flying objects G that can work within one work range Y is limited. In addition, the collection vehicle E may monitor the work statuses of a plurality of flying objects G. In addition, it is possible to use a configuration in which position adjustment is performed while either the collection vehicle E or each flying object G is moving, such that the collection vehicle E is always maintained at a position equidistant from each flying object G.

(8) The body work according to the present invention is not limited to harvesting work and may be any work. In addition, the work-related item according to the present invention is not limited to the produce P, but may be any item. For example, the body work may be tilling work, sowing work, fertilization work, or the like. Also, for example, the work-related items may be an energy source for the flying object G (e.g., a battery or fuel), a work section of the flying object G (e.g., the harvesting section 2), the flying object G itself, seeds, fertilizer, pharmaceuticals, or the like.

The present invention can also be used in an industry other than agriculture. For example, when the present invention is used in forestry, the work-related item may be a felled tree. When the present invention is applied to the construction industry, the work-related item may be a building material. When the present invention is applied to the fishing industry, the work-related item may be a fish or a shellfish.

(9) Although the above embodiment describes harvesting work, the present invention is not limited to this. For example, the flying object G may supply some materials (e.g., planting, sowing, applying pharmaceuticals, fertilizing) to an agricultural field within a range (work range Y) designated by the collection vehicle E, and the collection vehicle E may then collect any materials remaining on the flying object G after the supply. In addition, clumps of grass that have been raked up after mowing may be collected by the collection vehicle E.

Note that the configurations disclosed in the above-described embodiment (including other embodiments, the same applies below) can be applied in combination with configurations disclosed in other embodiments, as long as no contradiction occurs. In addition, the embodiments disclosed in this specification are merely examples, and the present invention is not limited to these embodiments, and can be modified as appropriate without departing from the object of the present invention.

### Industrial Applicability

The present invention can be used in a work system including a flying object and in a flying object.

### Description of Reference Signs

- 1: Body
- 2: Harvesting section (work section)
- 4: Buffer section
- 8: Delivery section
- 12: Speed reduction section
- 22: Collection vehicle location acquisition unit
- 23: Range setting unit
- 24: Work control unit
- A: Work system
- E: Collection vehicle
- G: Flying object
- P: Produce (work-related item)
- Y: Work range

## Claims

1. A work system comprising:
a flying object having a body capable of flight, the body having a work section configured to perform work;
a collection vehicle configured to collect a work-related item related to body work that is work performed by the body;
a collection vehicle position acquisition unit configured to acquire collection vehicle position information indicating a position of the collection vehicle; and
a work control unit configured to control the body work based on the collection vehicle position information.

2. The work system according to claim 1, further comprising
a range setting unit configured to set a work range based on the collection vehicle position information,
wherein the work control unit controls the body work in such a manner that the body work is executed within the work range and is not executed outside the work range.

3. The work system according to claim 1, further comprising
a delivery section configured to deliver the work-related item from the flying object to the collection vehicle.

4. The work system according to claim 3,
wherein the delivery section has a speed reduction section configured to reduce a falling speed of the work-related item from the flying object to the collection vehicle.

5. The work system according to claim 1, further comprising
a buffer section that softens collision of the work-related item against the collection vehicle.

6. The work system according to claim 1,
wherein no member coupling the flying object and the collection vehicle is provided.

7. The work system according to any one of claims 1 to 6,
wherein the work-related item is produce produced in an agricultural field,
the work section is a harvesting section configured to harvest the produce in the agricultural field, and
the body work is work of harvesting the produce by the body.

8. A flying object comprising:
a body capable of flight, the body having a work section configured to perform work;
a collection vehicle position acquisition unit configured to acquire collection vehicle position information indicating a position of a collection vehicle configured to collect a work-related item relating to body work that is work performed by the body; and
a work control unit configured to control the body work based on the collection vehicle position information.

9. The flying object according to claim 8, further comprising
a range setting unit configured to set a work range based on the collection vehicle position information,
wherein the work control unit controls the body work in such a manner that the body work is executed within the work range and is not executed outside the work range.

10. The flying object according to claim 8, further comprising
a delivery section configured to deliver the work-related item to the collection vehicle.

11. The flying object according to claim 10,
wherein the delivery section has a speed reduction section configured to reduce a falling speed of the work-related item to the collection vehicle.

12. The flying object according to any one of claims 8 to 11,
wherein the work-related item is produce produced in an agricultural field,
the work section is a harvesting section configured to harvest the produce in the agricultural field, and
the body work is work of harvesting the produce by the body.
